# EUROPEAN PATENT APPLICATION

(11) **EP 4 778 862 A1**
(43) Date of publication of application: **22.07.2026**
(21) Application number: 26150613.3
(22) Date of filing: 07.01.2026
(51) Int. Cl.: B65G 43/10, B65G 47/84, B65G 47/52, B65B 43/46

(54) **APPARATUS FOR PERFORMING AT LEAST TWO DIFFERENT OPERATIONS ON CONTAINERS**

(30) Priority: 16.01.2025 IT 202500000654
(71) Applicant: G.D S.p.A., 40133 Bologna (BO) (IT)
(72) Inventor: MORETTI, Carlo, I-40133 Bologna (IT); DEGLIESPOSTI, Paolo, I-40133 Bologna (IT)
(74) Representative: Buzzi, Notaro & Antonielli d'Oulx S.p.A.

(57) **Abstract**

An apparatus (10) for performing a first and a second operation on containers (100) is described, comprising:
- a transport line (20) for advancing a succession of containers (100) arranged in a row along a transport path (K), according to a stepwise advancement movement;
- a first operational station (50) for performing the first operation on the containers (100) transported along the transport path (K); and
- a second operational station (80) for performing the second operation on the containers (100) transported along the transport path (K);
wherein said second operational station (80) is arranged downstream of said first operational station (50), along said transport path (K).

The apparatus (10) is characterized in that said transport line (20) comprises a first section (22) configured to move the containers (100) according to a stepwise advancement movement defined by a first advancement step (S1) and by a first movement cycle (M1), and a second section (24) configured to move the containers (100) according to a stepwise advancement movement defined by a second advancement step (S2) and by a second movement cycle (M2).

The apparatus comprises a transfer unit (200) for transferring the containers (100) from a terminal region of said first section (22) to an initial region of said second section (24).

## Description

### Field and object of the invention

The present invention relates to an apparatus for performing at least two different operations, for example filling and capping, on containers in the pharmaceutical sector.

In general, the apparatus described herein is of the type comprising:
- a transport line for advancing a succession of containers arranged in a row along a transport path, according to a stepwise advancement movement;
- a first operational station for performing a first operation on the containers transported along the transport path; and
- a second operational station for performing a second operation on the containers transported along the transport path;
wherein said second operational station is arranged downstream of said first operational station, along said transport path.

In a per se known manner, the stepwise movement of the containers along the transport path is characterized by a movement cycle. The movement cycle is usually defined by a movement phase in which a given number of containers is transported to the single station, and by a stationary phase, during which the station can operate on the given number of containers.

The movement cycle is therefore determined based on the operational cycles of the various stations of the apparatus, so that these can operate on the transported containers for the time necessary to perform the required operations.

Usually, the choice of the movement cycle of the line is dictated by the objective of achieving the highest possible production volumes compatibly with existing technological and cost constraints, and taking into account the various needs of the specific applications.

In this regard, it is known to set up the different operational stations so that they have corresponding operational cycles synchronized with a same movement cycle of the transport line.

In this context, the present invention proposes a new solution of an apparatus of the type indicated at the beginning, which is advantageous for the reasons that will be discussed below.

In general, the present invention relates to an apparatus according to claim 1.

The claims form an integral part of the teachings provided herein.

### Detailed description of one or more embodiments of the invention

Further characteristics and advantages of the present invention will be apparent from the following description with reference to the attached drawings, provided by way of non-limiting example only, in which:
- figure 1 represents an example of the apparatus described herein;
- figure 2 represents an exploded view of an example of a closed container that can be produced with the apparatus of figure 1;
- figure 3 illustrates a detail of a dropper nozzle delivery station of the apparatus of figure 1.

In the following description, various specific details are illustrated aimed at an in-depth understanding of the embodiments. The embodiments can be realized without one or more of the specific details, or with other methods, components or materials etc. In other instances, known material structures or operations are not shown or described in detail to avoid obscuring various aspects of the embodiment.

The references used herein are for convenience only and thus do not define the scope of protection or the scope of the embodiments.

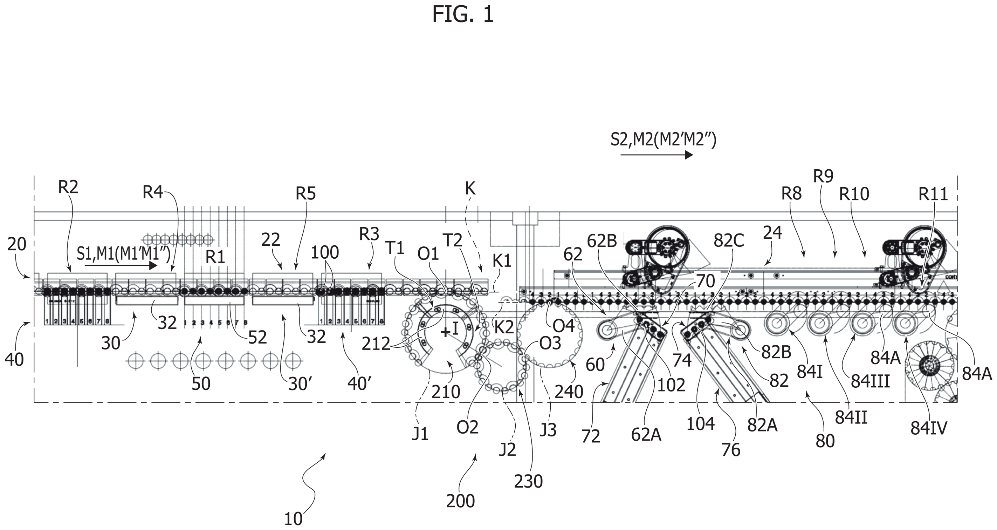

With reference to figure 1, an apparatus 10 for filling and capping containers 100 is illustrated therein.

The apparatus described herein can be used for packaging products of any type in containers, without any limitation regarding the field of application.

In the illustrated example, the containers 100 are used for packaging a medicinal product.

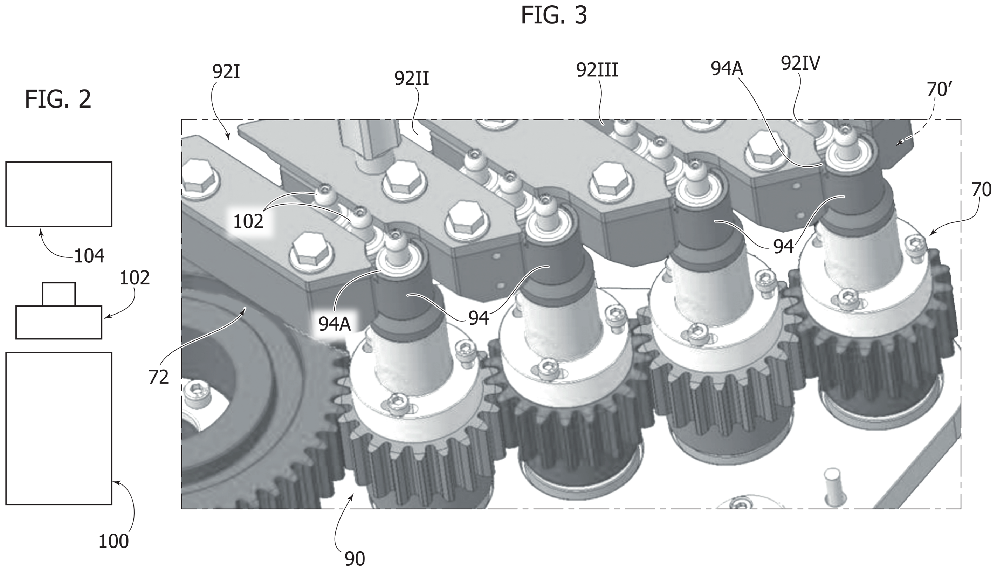

In this regard, figure 2 illustrates a single container 100, and a dropper nozzle 102 and a cap 104 that must be applied to the container 100, after its filling with the medicinal product, to produce the final package.

The apparatus 10 is configured to fill the single container 100 with the product and then to apply first the dropper nozzle 102 onto it and, subsequently, the cap 104, which is applied over the dropper nozzle 102 and is screwed onto a threaded end of the container 100.

In one or more preferred embodiments, like the one illustrated, the apparatus 10 comprises:
- a transport line 20 for advancing a succession of containers 100 arranged in a row along a transport path K, according to a stepwise advancement movement;
- a filling station 50 for dosing a product inside the containers 100;
- an application station 60 for applying the dropper nozzles 102 onto the filled containers 100; and
- a capping station 80 for closing, via the caps 104, the filled containers 100 provided with respective dropper nozzles 102.

In one or more preferred embodiments, like the one illustrated, the capping station 80 comprises, in turn, an application substation 82 for applying the caps 104 onto the containers 100, and four screwing substations 84I, 84II, 84III, and 84IV for screwing the previously applied caps 104 onto the containers 100.

In general, such stations can be realized according to techniques known in the art. In any case, they will be described in greater detail later.

Furthermore, it is noted that the apparatus described herein can also comprise operational stations of other types, for example a weighing station, a testing station, a washing station, etc.

In general, the apparatus described herein comprises a first operational station for performing a first operation on the containers 100, and a second operational station for performing a second operation on the containers 100. In this regard, the teachings provided below with specific reference to the illustrated example are to be understood as equally applicable also in combination with a generic first operational station and a generic second operational station.

In one or more preferred embodiments, like the one illustrated, the transport line 20 comprises a first transport section 22, which extends along a first portion K1, preferably straight, of the transport path K, and a second transport section 24, which extends along a second portion K2, preferably straight, of the transport path K, subsequent to the first portion K1.

The two transport sections 22, 24 of the transport line 20 are both configured to advance the containers 100, along the respective portions K1, K2, in a row and according to a stepwise advancement movement.

In one or more preferred embodiments, like the one illustrated, the two sections 22, 24 can comprise respective walking beam conveyors provided with transport members 22A, 24A that are movable according to a reciprocating motion along respective straight directions r1, r2 parallel to the portions K1, K2, respectively.

The two walking beam conveyors can be of a known type, so they will not be described here in detail.

Preferably, the conveyors in question comprise respective electric actuators for driving their transport members 22A, 24A.

In one or more preferred embodiments, like the one illustrated, the transport section 22 is configured to move the containers 100 according to a stepwise advancement movement defined by an advancement step S1 and by a movement cycle M1 comprising a movement phase M1' and a stationary phase M1".

In one or more preferred embodiments, like the one illustrated, the transport section 24 is in turn configured to move the containers 100 according to a stepwise advancement movement defined by an advancement step S2 and by a movement cycle M2 comprising a movement phase M2' and a stationary phase M2".

Preferably, the step S1 has a length different from the length of step S2.

Preferably, the step S1 has a length that is a multiple of the length of step S2.

In the illustrated example, the step S1 has a length approximately double the length of step S2.

Preferably, the movement cycle M1 has a duration different from the duration of movement cycle M2.

Preferably, the movement cycle M1 has a duration that is a multiple of the duration of movement cycle M2.

In the illustrated example, the movement cycle M1 has a duration approximately double the duration of movement cycle M2.

In the illustrated example, the stepwise advancement movement of section 22 is such that, in the movement phase M1' of each movement cycle M1, eight containers 100 are transported to an operational region R1 of the filling station 50, along portion K1.

During the stationary phase M1", the eight containers 100 are stationary in the operational region R1.

In one or more preferred embodiments, like the one illustrated, the filling station 50 comprises a filling unit 52 configured to fill simultaneously all eight containers 100 that are stationary in the region R1 during the stationary phase M1".

Preferably, the filling unit 52 comprises a number of product dispensing nozzles equal to eight, i.e., equal to the number of containers 100 that are simultaneously stationary inside the operational region R1.

Preferably, the filling unit 52 is vertically movable to insert and extract its respective dispensing nozzles into and from the containers 100; conversely, the filling unit 52 is preferably stationary in a reference position along the portion K1 of the transport path K.

In one or more preferred embodiments, like the one illustrated, the apparatus 10 further comprises, along the portion K1 of the transport path K, a first weighing station 40, arranged upstream of the filling station 50, and a second weighing station 40', arranged downstream of the filling station 50.

Via the two weighing stations 40, 40', the apparatus 10 can precisely determine the quantity of product that has been dispensed by the filling unit 50 into the individual containers 100; the person skilled in the art will understand that the two weighing stations 40, 40' allow for the tare weight of the containers themselves.

In the illustrated example, the stepwise advancement movement of section 22 is such that, in the movement phase M1' of each movement cycle M1:
- eight containers 100 are transported to an operational region R2 of the weighing station 40, along portion K1; and
- eight containers 100 are transported to an operational region R3 of the weighing station 40', along portion K1.

During the stationary phase M1", the two sets of eight containers 100 are stationary in the two operational regions R2, R3, respectively.

Preferably, the two weighing stations 40, 40' are each configured to operate simultaneously on the eight containers 100 that are stationary in their respective operational regions R2, R3, during the stationary phase M1".

In one or more preferred embodiments, like the one illustrated, the apparatus 10 further comprises, along the portion K1 of the transport path K, a first inert gas blowing station 30 for blowing an inert gas, for example nitrogen, into the containers 100, which is arranged downstream of the weighing station 40 and upstream of the filling station 50.

Furthermore, the apparatus 10 comprises a second inert gas blowing station 30' for blowing an inert gas, for example nitrogen, into the containers 100, which is arranged downstream of the filling station 50 and upstream of the weighing station 40'.

The two inert gas blowing stations 30, 30' allow for creating a controlled atmosphere inside the containers 100 capable of optimally preserving the medicinal product.

In the illustrated example, the stepwise advancement movement of section 22 is such that, in the movement phase M1' of each movement cycle M1:
- eight containers 100 are transported to an operational region R4 of the inert gas blowing station 30, along portion K1; and
- eight containers 100 are transported to an operational region R5 of the inert gas blowing station 30', along portion K1.

During the stationary phase M1", the two sets of eight containers 100 are stationary in the two operational regions R4, R5, respectively.

In one or more preferred embodiments, like the one illustrated, each of the two inert gas blowing stations 30, 30' comprises a blowing unit 32 configured to blow inert gas simultaneously inside all eight containers 100 that are stationary in the respective operational region R4 or R5, during the stationary phase M1".

Preferably, the blowing unit 32 comprises a number of gas blowing nozzles equal to eight, i.e., equal to the number of containers 100 that are simultaneously stationary inside the operational region R4 or R5.

Preferably, the blowing unit 32 is vertically movable to insert and extract its respective blowing nozzles into and from the containers 100; conversely, the blowing unit 32 is preferably stationary in a reference position along the portion K1 of the transport path K.

In the illustrated example, the stepwise advancement movement of section 24 is such that, in the movement phase M2' of each movement cycle M2:
- four containers 100 are transported to an operational region R6 of the application station 60, along portion K2;
- four containers 100 are transported to an operational region R7 of the application substation 82, along portion K2;
- four containers 100 are transported to an operational region R8 of the screwing substation 84I, along portion K2;
- four containers 100 are transported to an operational region R9 of the screwing substation 84II, along portion K2;
- four containers 100 are transported to an operational region R10 of the screwing substation 84III, along portion K2; and
- four containers 100 are transported to an operational region R11 of the screwing substation 84IV, along portion K2.

During the stationary phase M2", the same sets of four containers 100 are stationary in the respective operational regions R6-R11.

It can now be observed that the number of containers 100 on which the different stations or substations of the apparatus 10 placed along section 24 of the transport line 20 operate, is half the number of containers on which the stations placed along section 22 of the same transport line operate.

At the same time, the stations or substations placed along section 24 of the transport line 20 operate based on the movement cycle M2, which has a duration equal to half the duration of the movement cycle M1, based on which the stations placed along section 22 operate instead.

The person skilled in the art will note that the flow of containers 100 per unit time is therefore the same in the two sections 22 and 24: indeed, the eight containers 100 "processed" in the movement cycle M1 of section 22 correspond precisely to the four plus four containers 100 "processed" in the two movement cycles M2 of section 24 that occur in the time of one movement cycle M1.

In one or more preferred forms, like the one illustrated, the application station 60 is configured to apply respective dropper nozzles 102 simultaneously onto the four containers 100 that are stationary in the operational region R6 during the stationary phase M2".

In one or more preferred embodiments, like the one illustrated, the application station 60 comprises a pick-and-place device 62 configured to pick up simultaneously four dropper nozzles 102 from a delivery station 70, and to apply the four picked dropper nozzles 102 onto the four containers 100 that are stationary in the operational region R6 during the stationary phase M2".

Incidentally, the delivery station 70 belongs to a feeding system 72 for feeding the dropper nozzles 102 to the apparatus 10, which is operatively associated with the application station 60.

Preferably, the pick-and-place device 62 comprises an articulated robot arm 62A, for example of the SCARA type, having as an end effector a gripping unit 62B.

Preferably, the gripping unit 62B can be configured to press the dropper nozzles 102 against the respective containers 100 so as to create a snap-fit coupling between them.

In one or more preferred embodiments, like the one illustrated, the application substation 82 comprises a pick-and-place device 82A configured to pick up simultaneously four caps 104 from a delivery station 74, and to apply the four picked caps 104 onto the four containers 100 that are stationary in the operational region R7 during the stationary phase M2".

Incidentally, the delivery station 74 belongs to a feeding system 76 for feeding the caps 104 to the apparatus 10, which is operatively associated with the application substation 82.

Preferably, the pick-and-place device 82A comprises an articulated robot arm 82B, for example of the SCARA type, having as an end effector a gripping unit 82C.

In one or more preferred embodiments, like the one illustrated, each screwing substation of the four substations 84I-84IV comprises a screwing unit 84A configured to screw the respective cap 104 onto one of the four containers 100 that are stationary in the respective operational region (R8 or R9 or R10 or R11).

More particularly, considering a same series of four containers 100 that goes successively to the four screwing substations, the screwing units of the four substations are configured to operate respectively on containers 100 in different positions of the series, so that the respective caps 104 are screwed onto all the containers 100 of the series when the series is at the last screwing substation 84IV and after the cycle M2 has ended.

In the illustrated example:
- the screwing unit 84A of substation 84I operates on the first container 100 (starting from the most downstream position) of the series of four containers;
- the screwing unit 84A of substation 84II operates on the last container 100 of the series of four containers;
- the screwing unit 84A of substation 84I operates on the third container 100 of the series of four containers; and
- -the screwing unit 84A of substation 84I operates on the second container 100 of the series of four containers.

Each screwing substation can comprise a movement device to cyclically move, in a manner synchronized with the movement cycle M2, the screwing unit 84A between a position spaced from the containers 100 to allow them to advance along portion K2, and an engagement position wherein it goes to engage the cap 104 of the predetermined container 100 that is in the operational region of the substation, for performing the screwing operation.

In view of the above, it can be noted how, similarly to the application station 60, the capping station 80 is configured to perform the capping operation on four containers 100 in total, for each movement cycle M2.

The subdivision of the capping station 80 into four different screwing substations allows to obtain the space necessary for the individual screwing units and the movement devices associated with them.

On the other hand, thanks to the stepwise movement of section 24 according to the advancement step S2, half of the advancement step S1, and according to the movement cycle M2, half of the movement cycle M1, only four screwing substations are needed, instead of eight substations, whereby the extension of the apparatus 10 is considerably contained, with benefits both in terms of footprint and in terms of manufacturing and maintenance costs of the apparatus.

In one or more preferred embodiments, like the one illustrated, the apparatus 10 comprises a transfer unit 200 for transferring the containers 100 from a terminal region of section 22, which in the illustrated example is located downstream of the weighing station 40', to an initial region of section 24, which in the illustrated example is located upstream of the application station 60.

In one or more preferred embodiments, like the one illustrated, the transfer unit 200 is configured to pick up from section 22, at each movement cycle M1, a series of eight containers 100, and to release the eight containers 100 to section 24, four containers 100 at a time, in two subsequent movement cycles M2.

In one or more preferred embodiments, like the one illustrated, the transfer unit 200 comprises a transfer device 210 and two transfer wheels 230, 240, which are operatively connected in series.

The transfer device 200 comprises a plurality of transfer members 212 rotatable about a common axis of rotation I. Preferably, each transfer member 212 is driven so as to always rotate in the same direction of rotation.

In one or more preferred embodiments, like the one illustrated, the single transfer member 212 is configured to receive a series of eight containers 100.

In one or more preferred embodiments, like the one illustrated, the transfer member 212 has a circular sector configuration and is provided, on its outer circular edge, with a plurality of seats 212A for receiving the containers 100. In the illustrated example, the transfer member 212 comprises eight seats 212A for receiving the series of eight containers 100.

As a result of its rotation about the axis of rotation I, the transfer member 212 defines a circular transport trajectory J1 of the containers 100 that is tangent to portion K1 of section 22, at a tangency point O1.

The circular transport trajectory J1 is also tangent to a circular transport trajectory J2 defined by the transfer wheel 230, at a tangency point O2.

The transfer device 210 is configured to rotationally drive each transfer member 212 bringing it, first, to a pickup region T1, containing the tangency point O1, to pick up the series of eight containers 100 from section 22, during the movement cycle M1, and subsequently bringing it to a delivery region T2, containing the tangency point O2, to deliver the eight containers 100 to the transfer wheel 230, releasing them to this wheel in groups of four containers at a time, in two subsequent movement cycles M2.

It is therefore clear that the transfer member 212 is driven according to a rotational movement about the axis of rotation I characterized by a variable angular velocity which is a function of the transport velocities of both movement cycles M1, M2, as described below.

Firstly, the transfer member 212 passes through the pickup region T1 precisely during the movement phase M1' of the movement cycle M1, and moving at a velocity such as to determine a linear transport velocity of the containers 100 that is substantially equal to the advancement velocity of the containers 100 along the transport portion K1.

At the tangency point O1, the transfer member 212 intercepts one after the other the eight containers 100 advanced along portion K1 by section 22, receiving them inside its seats 212A.

Subsequently, the transfer member 212 then moves to the delivery region T2.

The transfer member 212 traverses the delivery region T2 moving in a manner precisely synchronized with the movement phases M2' of two subsequent movement cycles M2 and at a velocity such as to determine a linear transport velocity of the containers 100 that is substantially equal to the advancement velocity of the containers 100 along the transport portion K2.

At the tangency point O2, the transfer member 212 releases the first series of four containers 100 to the transfer wheel 230, during the movement phase M2' of a first movement cycle M2, and then releases the second series of four containers 100 to the transfer wheel 230, during the movement phase M2' of a second movement cycle M2.

For its part, the transfer wheel 230 is driven according to a stepwise rotational movement that reproduces, along the circular transport trajectory J2, the stepwise advancement movement performed by section 24.

In particular, the transfer wheel 230 is rotationally driven according to the same movement cycle M2 and at each movement phase M2" determines a displacement of the containers 100 along its transport trajectory J2 equal to the advancement step S2.

The transfer wheel 240 is in turn arranged so as to define a circular transport trajectory J3, which is tangent to the circular trajectory J2, at a tangency point O3, and is tangent to portion K2 of section 24, at a tangency point O4.

Like wheel 230, wheel 240 is also driven to reproduce the stepwise advancement movement performed by section 24.

In a per se known manner, the transfer wheels 230, 240 present on their respective peripheral surfaces a continuous succession of seats for receiving the containers 100, which extends along the entire circumferential extension of said surfaces.

It is noted that the two transfer wheels 230, 240 essentially have the function of spatially moving the containers 100 to bring them back towards the transport path K, after they have been moved away from said path as a result of the action of the transfer device 210.

In alternative embodiments, depending on the configuration of the transport path K, one or both of the two transfer wheels 230, 240 may also not be provided.

The plurality of transfer members 212 of the device 210 follow one after the other in performing the transfer operation described above, so that, without interruption, at each movement cycle M1, a transfer member 212 picks up a series of eight containers 100 from the transport section 22, and, simultaneously, at each movement cycle M2, a further transfer member 212 releases a series of four containers 100 to the transfer wheel 230.

The series of four containers 100 released to the transfer wheel 230 then move along the transport trajectory J1 of the same wheel 230, and then along the transport trajectory J2 of the transfer wheel 240, to be finally transferred to the transport section 24, always in a manner perfectly synchronized with the stepwise advancement movement performed by the same section 24.

It is clear that the numbers of containers 100 indicated above are merely exemplary.

In general, the apparatus described herein 10 is capable of making the stations placed along the first transport section 22 operate on a first number of containers, at each movement cycle M1, and of making the stations or substations placed along the second transport section 24 operate on a second number of containers 100, at each movement cycle M2.

The first number of containers is a multiple of the second number of containers, which is a function of the ratio between the first advancement step S1 and the second advancement step S2.

The duration of the first movement cycle M1 is a multiple of the duration of the movement cycle M2, which is also a function of the ratio between the first advancement step S1 and the second advancement step S2.

Preferably, the ratio between the duration of the first movement cycle M1 and the duration of the second movement cycle M2 is approximately equal to the ratio between the first advancement step S1 and the second advancement step S2.

Preferably, the ratio between the first number of containers and the second number of containers is approximately equal to the ratio between the first advancement step S1 and the second advancement step S2.

With reference to figure 3, the delivery station 70 of the feeding system 72 can comprise a device 90 for controlling the flow of the dropper nozzles 102 to a delivery position 70' of the same station.

In particular, the feeding system comprises four lanes 92I, 92II, 92III, 92IV configured to feed as many rows of dropper nozzles 102, for example by gravity, to the delivery station 70.

The control device 90 comprises, at the terminal end of each lane, a sleeve 94, which is rotatable about an axis of rotation orthogonal to the transport plane of the lane, and which is provided with a lateral opening 94 configured to be traversed by the dropper nozzles 102.

The four sleeves 94 are movable in a synchronized manner between a first position in which they orient their respective openings 94A in the upstream direction of the relative lanes (figure 3), and a second position in which they instead orient their respective openings in the downstream direction.

In operation, the sleeves 94 first arrange themselves in the first position to receive inside themselves, through their respective openings 94A, respective dropper nozzles 102, and subsequently, they arrange themselves in the second position to release the dropper nozzles to the delivery position 70' and simultaneously separate them from the rows of nozzles in the relative lanes 92I, 92II, 92III, 92IV.

In the illustrated example, the sleeves 94 are mechanically connected to each other via respective gears and are driven by a common actuator. In an alternative embodiment, it is instead possible to provide independent actuators that each drive a respective sleeve 94.

It is further noted that a solution of the same type can also be adopted for the delivery station 74 and the related feeding system 76.

Naturally, the principle of the invention remaining unchanged, the details of construction and the embodiments may vary, even significantly, with respect to what is illustrated here by way of non-limiting example only, without thereby departing from the scope of the invention, as defined by the appended claims.

## Claims

1. Apparatus (10) for performing at least a first and a second operation on containers (100), comprising:
- a transport line (20) for advancing a succession of containers (100) arranged in a row along a transport path (K), according to a stepwise advancement movement;
- a first operational station (50) for performing the first operation on the containers (100) transported along the transport path (K); and
- a second operational station (80) for performing the second operation on the containers (100) transported along the transport path (K);
wherein said second operational station (80) is arranged downstream of said first operational station (50), along said transport path (K);
said apparatus (10) being **characterized in that** said transport line (20) comprises:
- a first section (22) extending along a first transport portion (K1) of said transport path (K), the first operational station (50) being arranged along the first section (22); and
- a second section (24) extending along a second transport portion (K2) of said transport path (K), subsequent to said first transport portion (K1), the second operational station (80) being arranged along the second section (24);
wherein said first section (22) is configured to move the containers (100) according to a stepwise advancement movement defined by a first advancement step (S1) and by a first movement cycle (M1), and wherein said second section (24) is configured to move the containers (100) according to a stepwise advancement movement defined by a second advancement step (S2), different from the first advancement step (S1), and by a second movement cycle (M2), different from the first movement cycle (M1);
said apparatus comprising a transfer unit (200) for transferring the containers (100) from a terminal region of said first section (22) to an initial region of said second section (24),
wherein said transfer unit (200) is configured to pick up a first number of containers (100) from said first section (22), during said first movement cycle (M1), and to release said first number of containers (100) to said second section (24) in a given number of cycles of said second movement cycle (M2) and a second number of containers at a time, which are a function of the ratio between the first advancement step (S1) and the second advancement step (S2).

2. Apparatus according to claim 1, wherein said first operational station is preferably a filling station (50), and is configured to operate, preferably perform a filling operation, simultaneously on a number of containers equal to said first number of containers, during a stationary phase (M1") of said first movement cycle (M1).

3. Apparatus according to claim 1 or 2, wherein said second operational station is preferably a capping station (80), and is configured to operate, preferably perform a capping operation, simultaneously on a number of containers equal to said second number of containers, during a stationary phase (M2") of said second movement cycle (M2).

4. Apparatus according to any one of the preceding claims, wherein said transfer unit (200) comprises a transfer device (210) comprising at least one transfer member (212) rotating about an axis of rotation (I),
and wherein said transfer unit (200) is configured to rotationally drive said transfer member (212) according to a variable rotational velocity, so as to be able to pick up said first number of containers, during said first movement cycle (M1), and so as to be able to release said first number of containers (100) to said second section (24) in a given number of cycles of said second movement cycle (M2) and a second number of containers at a time.

5. Apparatus according to claim 4, wherein said at least one transfer member (212) defines a circular transport trajectory (J1) which has a tangency point (O1) with the first transport portion (K1) of the first transport section (22), and a second tangency point (O2) with the second transport portion (K2) of the second transport section (24), or with the transport trajectory (J2) of at least one further transfer device of the transfer unit (200),
and wherein said transfer unit (200) is configured to rotationally drive said transfer member (212) according to a variable rotational velocity so that
in a manner synchronized with a movement phase (M1') of said first movement cycle (M1), said transfer member (212) moves through a pickup region (T1) containing the first tangency point (O1), at a transport velocity along said circular trajectory (J1) substantially equal to the advancement velocity of the containers (100) along the first portion (K1) of the first section (22), to intercept one after the other the first number of containers advanced by the first section (24) during said movement phase (M1');
in a manner synchronized with the movement phases (M2') of said given number of cycles of said second movement cycle (M2), said transfer member (212) moves through a delivery region (T2) containing said second tangency point (O2), at a transport velocity along said circular trajectory (J1) substantially equal to the advancement velocity of the containers (100) along the second portion (K2) of the second section (24), to release said second number of containers, one after the other, to said second section (24) or to said further transfer device, at each movement phase (M2').

6. Apparatus according to claim 5, wherein said at least one further transfer device comprises a transfer wheel (230, 240) rotatable about an axis of rotation and defining a circular transport trajectory (J2, J3) tangent to the circular transport trajectory (J1) of the at least one transfer member (212), at said second tangency point (O2), and
wherein said transfer unit (210) is configured to rotate said at least one transfer wheel (230) according to a stepwise rotational movement that is defined by a circular arc, along said transport trajectory (J1), of a length equal to said second advancement step (S2), and by said second movement cycle (M2).

7. Apparatus according to claim 4 or 5, wherein said at least one transfer member (212) is configured to simultaneously receive said first number of containers.

8. Apparatus according to any one of the preceding claims, wherein said first advancement step (S1) is a multiple of said second advancement step (S2) and wherein said first movement cycle (M1) has a duration that is a multiple of the duration of the second movement cycle (M2), preferably the ratio between the duration of said first movement cycle (M1) and the duration of said second movement cycle (M2) being approximately equal to the ratio between the first advancement step (S1) and the second advancement step (S2).

9. Apparatus according to any one of the preceding claims, wherein said first and second transport sections (22, 24) each comprise a walking beam conveyor.

10. Method for performing at least a first and a second operation on containers (100), implemented by an apparatus according to any one of the preceding claims, said method comprising:
- advancing a row of containers (100) along the first portion (K1) of the first transport section (22) according to a stepwise incremental movement defined by the first advancement step (S1) and by the first movement cycle (M1);
- advancing a row of containers (100) along the second portion (K2) of the second transport section (24) according to a stepwise movement defined by the second advancement step (S2) and by the second movement cycle (M2);
- in a first stationary phase (M1") of each first movement cycle (M1), via said first operational station (50) performing the first operation on a first number of containers (100);
- in a second stationary phase (M2") of each second movement cycle (M2), via said second operational station (80) performing the second operation on a second number of containers (100).

11. Method according to claim 10, wherein said first advancement step (S1) is a multiple of said second advancement step (S2) and wherein said first movement cycle (M1) has a duration that is a multiple of the duration of the second movement cycle (M2), preferably the ratio between the duration of said first movement cycle (M1) and the duration of said second movement cycle (M2) being approximately equal to the ratio between the first advancement step (S1) and the second advancement step (S2).

12. Method according to claim 10 or 11, wherein the first operational station (50) is a filling station that performs the filling of the first number of containers (100) in the first stationary phase (M1") and wherein the second operational station (80) is a capping station for the second number of containers (100) in the second stationary phase (M2").
